# EUROPEAN PATENT SPECIFICATION

(11) **EP 3 007 887 B1**
(45) Date of publication and mention of the grant of the patent: **30.08.2017**
(21) Application number: 14728212.3
(22) Date of filing: 06.06.2014
(51) Int. Cl.: B29D 30/06

(54) **MOULDING ELEMENT COMPRISING CUTTING MEANS FOR MOULDING AND VULCANIZING A TYRE TREAD**
FORMTEIL MIT SCHNEIDEMITTELN ZUM FORMEN UND VULKANISIEREN EINER REIFENLAUFFLÄCHE
ÉLÉMENT DE MOULAGE COMPRENANT DES MOYENS DE DÉCOUPE POUR MOULER ET VULCANISER LA BANDE DE ROULEMENT D'UN PNEU

(30) Priority: 14.06.2013 EP 13172035
(43) Date of publication of application: 20.04.2016
(73) Proprietor: Compagnie Générale des Etablissements Michelin, 63000 Clermont-Ferrand (FR)
(72) Inventor: OHASHI, Tetsuo, Tokyo 163-1073 (JP)
(74) Representative: Demaure, Pierre-Yves
(86) International application number: PCT/EP2014/061799
(87) International publication number: WO 2014/198652

(56) References cited:
- WO-A1-2006/069912
- WO-A1-2013/087826
- WO-A1-2013/087829
- GB-A- 1 124 915
- US-A- 3 432 888
- US-A- 4 553 918

## Description

### FIELD OF THE INVENTION

The present invention relates to the field of moulds for moulding and vulcanizing a tyre tread. More specifically, the invention relates to the moulds used for moulding in the tread grooves which are partially or completely covered by an additional cover layer.

### PRIOR ART

It is known practice to design tyres the tread of which comprises various rubber compounds. Document WO 03089257 discloses such treads. More specifically, document WO 03089257 discloses a tread comprising grooves the walls of which are covered with a cover layer. The material of which this cover layer is made differs from the rubber compound of which the tread is made. This material notably has much better wet grip than the wet grip of the rubber compound. This allows a very significant improvement in cornering performance on wet ground.

Document US 4553918 - A discloses a moulding element of a mould for moulding and vulcanizing a tyre tread, the moulding element comprising a moulding surface intended to mould part of the tyre tread surface, a rib intended to mould a groove in the tread and blades acting as cutting means positioned on either side of the rib.

Document US 3432888 - A discloses a tire moulding element, wherein the blades intended to mould sipes or grooves are represented in the figures by the elements (16) and the cutting means are represented by the elements (17).

Document GB 1124915 - A discloses the moulding of tread grooves covered with an additional cover layer, wherein the cover layer is pushed in the grooves by the rib and groove forming portions of the curing mould. No cutting step of the cover layer by cutting means is disclosed.

One way of manufacturing this tread is notably disclosed in document WO 2006069912. According to this method of manufacture, in a first step, provision is made for the material intended to constitute a cover layer to be injected in the form of one or more inserts into the green tyre using an injection nozzle. The insert or inserts is or are then shaped, in a second step, by ribs of a vulcanizing mould so that they cover all or part of the walls of the grooves moulded by these ribs.

This method of manufacture has its limits, particularly as far as obtaining precision mouldings is concerned. Specifically, during the shaping thereof, the insert experiences a significant shear force from the rib in order to convert this insert into a layer of lesser thickness. This shear force may cause cracking within the insert, making it more difficult to control the movements of the material of which this insert is made. The shape and the thickness of the cover layer thus formed may therefore be somewhat haphazard. The advantages afforded by the additional layer to the performance of the tyre are then reduced.

In addition, in this method of manufacture, it is necessary to make the inserts align with the ribs. This makes manufacture of the tread more complicated.

There is therefore a need to improve the incorporation of a cover layer on the walls of grooves of a tyre tread.

### DEFINITIONS

A "tyre" means all types of elastic tyre whether or not subjected to an internal pressure.

A "green tyre" or "green form" of a tyre means a superposition of a plurality of semi-finished rubber products present in the form of strips or sheets, with or without reinforcement. The green tyre is intended to be vulcanized in a mould in order to obtain the tyre.

The "tread" of a tyre means a quantity of rubber material bounded by lateral surfaces and by two main surfaces one of which is intended to come into contact with a road surface when the tyre is running.

A "tread surface" means the surface formed by those points on the tyre tread that come into contact with the road surface when the tyre is running.

A "mould" means a collection of separate moulding elements which, when brought closer towards one another, delimit a toroidal moulding space.

A "moulding element" of a mould means part of a mould. A moulding element is, for example, a mould segment.

A "moulding surface" of a moulding element means the surface of the mould that is intended to mould the surface of the tyre tread.

A "blade" of a moulding element means a protrusion projecting from the moulding surface. In the blades category, a distinction is made between sipe blades which are less than 2 mm wide and ribs which have a width of 2 mm or more. Sipe blades are intended to mould sipes in the tyre tread, which means cuts which at least partially close up when they fall within the contact patch where the tyre makes contact with the ground. The ribs are intended to mould grooves in the tread, which means cuts which do not close up when they fall within the contact patch in which the tyre makes contact with the ground.

### SUMMARY OF THE INVENTION

The invention relates to a moulding element of a mould for moulding and vulcanizing a tyre tread, as defined in claim 1, this tread comprising a tread surface intended to come into contact with the ground when the said tyre is rolling. The moulding element comprises a moulding surface intended to mould part of the tyre tread surface and a blade intended to mould a sipe or a groove in the tread. The moulding element comprises two cutting means positioned on either side of the blade at a certain distance from this blade, these cutting means comprising a plurality of pins.

The cutting means are able to cut a cover layer that covers a green tyre. The blade itself will mould a cut in the tread and at the same time guide part of the cover layer into the cut thus moulded.

The invention thus proposes that the cover layer is cut and some parts of this layer are positioned within the depth of the green tyre during one and the same movement of the moulding element with respect to the green tyre.

The cutting means can create a stress concentration at cutting means connection area. That stress causes block chipping during tyre rolling and crack initiation risk in the depth of the tread band. By using a plurality of pins as cutting means, opening stress for cuts moulded by pins is not directly applied to the rubber edge. Consequently, the crack initiation risk and the block shipping during tyre rolling are reduced.

In an alternative form of the embodiment, according to claim 2, the pins are aligned in a row along a direction of extension X. These pins comprise a body and a lamella on the top of this body, this lamella being aligned to this direction of extension X.

It is important that the cover layer crack initiated by one pin is connected to other cracks initiated by the other pins next to them. To make the cracks propagate in the proper direction, it is proposed to put lamella on the top of the pins and the directions of these lamella are aligned to the row of the pins.

In an another alternative form, according to claim 3, all or parts of the pins comprises a sharp edge.

This sharp edge improves the operation of cutting the cover layer.

### BRIEF DESCRIPTION OF THE DRAWINGS

Other features and advantages of the invention will emerge from the following description, given by way of non-limiting example, with reference to the attached drawings in which:
- **Figure 1** is a sectional drawing depicting schematically a moulding element according to the invention;
- **Figure 2** illustrates cutting means of the moulding element of **Figure 1** comprising a plurality of pins, according to a first embodiment of the invention;
- **Figure 3** illustrates a pin of the moulding element of **Figure 1****,** according to a second embodiment of the invention;
- **Figure 4** illustrates a pin of the moulding element of **Figure 1****,** according to a third embodiment of the invention;
- **Figure 5** illustrates a step of the method of manufacturing using the moulding element of **Figure 1****,** in which the cover layer is cut by the pins;
- **Figure 6** illustrates a step of the method of manufacturing using the moulding element of **Figure 1**, in which the blade drives a cut part of the cover layer into the green tyre;
- **Figure 7** illustrates a step of the method of manufacturing using the moulding element of **Figure 1****,** in which blade and lamella are totally embedded in the green tyre;
- **Figure 8** is a sectional drawing depicting schematically a tyre tread with a raised element partially covered by a cover layer, after using the moulding element of **Figure 1****.**

In the description that follows, elements that are substantially identical or similar will be denoted by identical references.

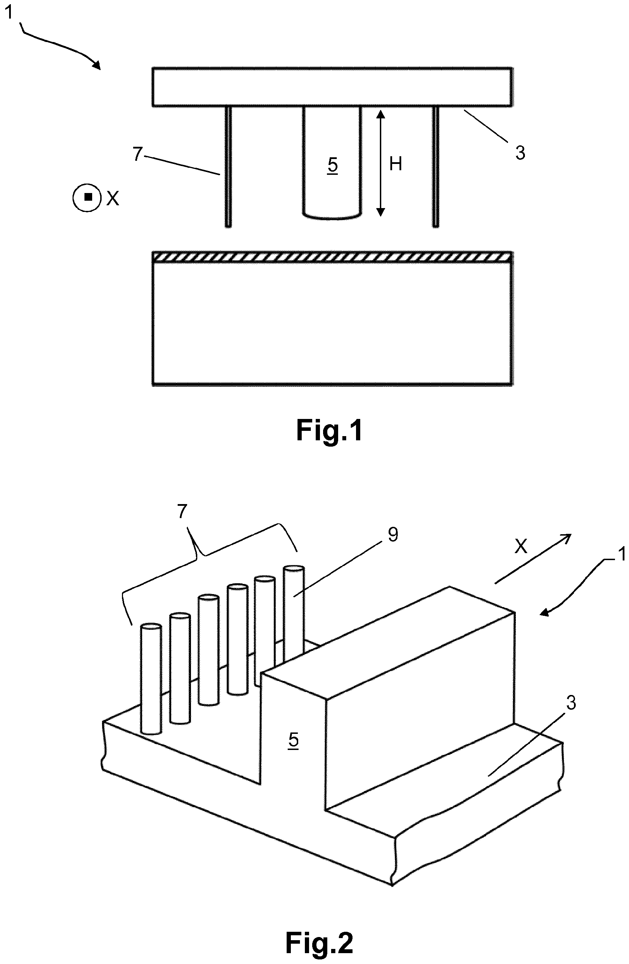

**Figure 1** depicts a moulding element 1 for implementing a method of manufacture according to the invention.

More specifically, the moulding element 1 comprises a moulding surface 3 intended to mould part of the tread surface of a tyre. The moulding element 1 also comprises blades 5 of which just one is depicted here to make the invention easier to understand. The blade in this instance is a rib 5 intended to mould a groove in the tyre tread. A "groove" in a tread means a cut in this tread of a width, i.e. the distance separating two lateral walls of this groove, greater than 2 mm. The rib 5 extends heightwise and projects from this moulding surface 3 with an height H. The rib 5 also extends lengthwise in a direction of extension X. In the mould, this direction X may be a circumferential direction following the circumference of the mould. As an alternative, the direction of extension X is a transverse direction perpendicular to the circumferential direction of the mould. In another alternative form, this direction of extension is an oblique direction making a non-zero angle with the circumferential direction and with the transverse direction of the mould.

The moulding element 1 of **Figure 1** also has two cutting means 7 arranged either side of the rib 5. These cutting means extend lengthwise in a direction parallel to the direction of extension X of the rib 5. A "parallel direction" means that the direction of extension of the cutting means makes an angle of between -5° and +5° with the direction of extension X of the rib.

The height of the cutting means is, here, higher than the height H of the rib 5. In another embodiments, the height of the cutting means is equal or lower than the height H of this rib 5.

**Figure 2** illustrates cutting means 7 comprising a plurality of pins 9. These pins are aligned to the direction of extension X of the blade 5.

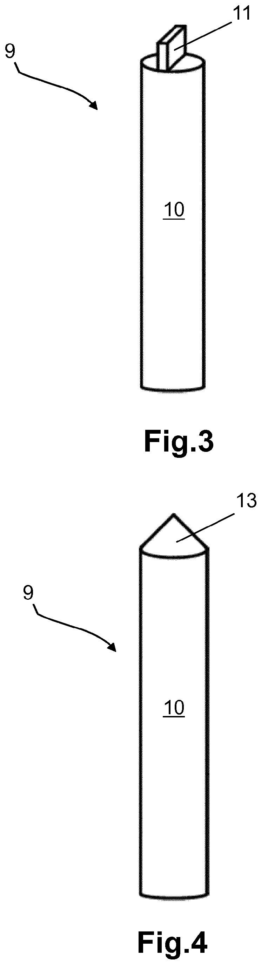

**Figure 3** illustrates another embodiment of pins 9. The pin comprises a body 10 and a lamella 11 on the top of this body. In a preferred form, the pins are placed in the mould 1 in such a way that all the lamella are aligned to the direction of extension X.

**Figure 4** illustrates another embodiment of pins 9 in which the pin comprises a sharp edge 13 on the top of the body 10.

Of course, it is possible to propose a pin combining the lamella of **figure 3** with the sharp edge of **figure 4****.**

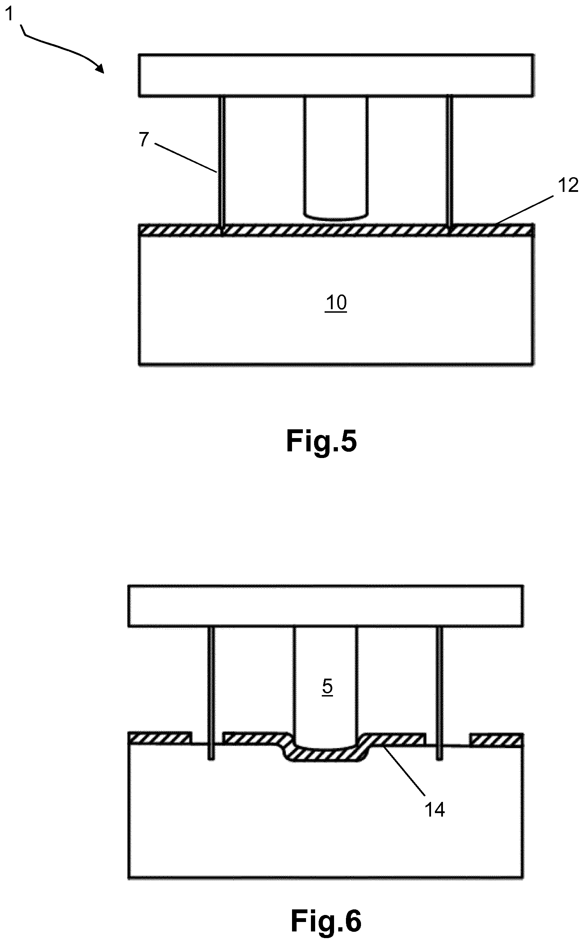

**Figure 5** to **Figure 8** illustrates the different steps of a method of manufacturing a tyre tread using a moulding element according to the invention.

**Figure 5** discloses a step in which the cover layer 12 is cut by the cutting means 7. In this step, the moulding element 1 and the green tyre 10 move closer to one another. This movement is, for example, initiated by a membrane (not depicted) in the mould. Under the action of a quantity of pressurized steam, this membrane swells and pushes the green tyre towards the moulding element 1.

**Figure 6** illustrates a step whereby the blade 5 drives part 14 of the cover layer into the green tyre.

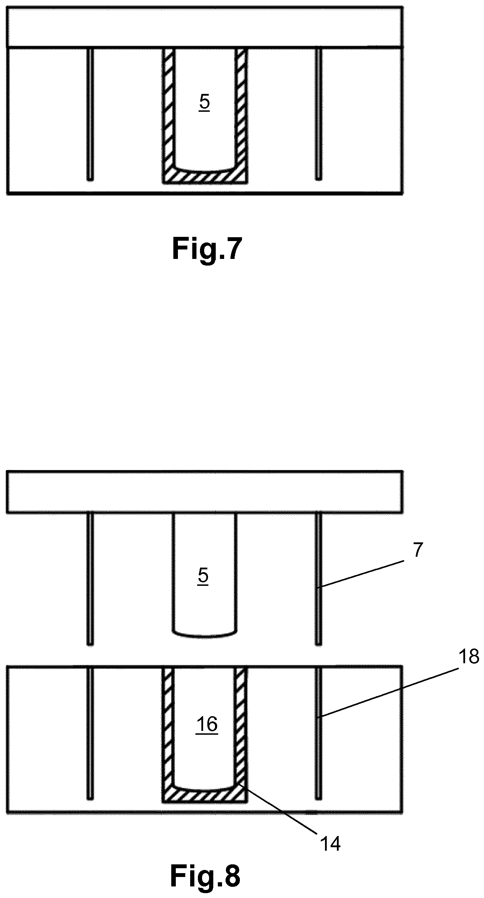

**Figure 7** illustrates an intermediate moulding step in which the rib 5 is pushed into the green tyre over its entire height. The entirety of the cover layer thus finds itself inside the green tyre. Once this step has been performed, it is then possible to vulcanize the green tyre, i.e. to convert the rubber material of which the green tyre is made from the plastic state to the elastic state. This vulcanizing step may also modify the internal structure of the cover layer.

**Figure 8** depicts the result of the various steps of moulding and vulcanizing the green tyre illustrated in **Figures 5** to **Figure 7****.** The part of the tread thus obtained comprises a groove 16 obtained by moulding rubber around the rib 5 and two sipes 18 obtained by moulding rubber around the two cutting means 7. It will be noted here that all of the walls of the groove, i.e. the lateral walls and the bottom wall flanked by the lateral walls, are covered with the cut part 14 of the cover layer.

The invention is not restricted to the examples described and depicted and various modifications can be made thereto without departing from its scope.

## Claims

1. Moulding element of a mould for moulding and vulcanizing a tyre tread, this tread comprising a tread surface intended to come into contact with the ground when the said tyre is rolling, this moulding element (1) comprising a moulding surface (3) intended to mould part of the tyre tread surface and a blade (5) intended to mould a sipe or a groove in the tread, **characterized in that** the moulding element comprises two cutting means (7) positioned on either side of the blade (5) at a certain distance from this blade, these cutting means (7) comprising a plurality of pins (9).

2. Moulding element according to Claim 1 in which the pins (9) are aligned in a row along a direction of extension X, these pins comprising a body (10) and a lamella (11) on the top of this body, this lamella being aligned to this direction of extension X.

3. Moulding element according to either one of Claims 1 and 2, **characterized in that** all or parts of the pins comprises a sharp edge (13).

## Patentansprüche

1. Formelement eines Formwerkzeugs zum Formen und Vulkanisieren einer Reifenlauffläche, wobei diese Lauffläche eine Laufflächenoberfläche umfasst, die dazu bestimmt ist, mit dem Boden in Kontakt zu kommen, wenn der Reifen rollt, wobei dieses Formelement (1) eine Formfläche (3), die dazu bestimmt ist, einen Teil der Reifenlaufflächenoberfläche zu formen, und eine Klinge (5), die dazu bestimmt ist, einen Lamelleneinschnitt oder eine Rille in der Lauffläche zu formen, umfasst, **dadurch gekennzeichnet, dass** das Formelement zwei Schneidmittel (7) umfasst, die auf beiden Seiten der Klinge (5) in einem gewissen Abstand zur Klinge positioniert sind, wobei diese Schneidmittel (7) mehrere Stifte (9) umfassen.

2. Formelement nach Anspruch 1, bei dem die Stifte (9) in einer Reihe in einer Erstreckungsrichtung X ausgerichtet sind, wobei diese Stifte einen Körper (10) und eine Lamelle (11) auf diesem Körper umfassen, wobei diese Lamelle auf diese Erstreckungsrichtung X ausgerichtet ist.

3. Formelement nach einem der Ansprüche 1 und 2, **dadurch gekennzeichnet, dass** alle oder einige der Stifte eine scharfe Kante (13) umfassen.

## Revendications

1. Élément de moulage d'un moule servant à mouler et vulcaniser une bande de roulement de pneumatique, cette bande de roulement comprenant une surface de bande de roulement destinée à venir en contact avec le sol lorsque ledit pneumatique roule, cet élément de moulage (1) comprenant une surface de moulage (3) destinée à mouler une partie de la surface de bande de roulement de pneumatique et une lame (5) destiné à mouler une lamelle ou un sillon dans la bande de roulement, **caractérisé en ce que** l'élément de moulage comprend deux moyens de coupe (7) positionnés de chaque côté de la lame (5) à une certaine distance de cet aileron, ces moyens de coupe (7) comprenant une pluralité de broches (9) .

2. Élément de moulage selon la revendication 1, dans lequel les broches (9) sont alignées en une rangée le long d'une direction d'étendue X, ces broches comprenant un corps (10) et une lamelle (11) au-dessus de ce corps, cette lamelle étant alignée sur cette direction d'étendue X.

3. Élément de moulage selon l'une ou l'autre des revendications 1 et 2, **caractérisé en ce que** tout ou partie des broches comprennent un bord aiguisé (13) .
